(19) Europäisches Patentamt
European Patent Office
Office européen des brevets

(11) Veröffentlichungsnummer : **0 362 312 B1**

(12) # EUROPÄISCHE PATENTSCHRIFT

(45) Veröffentlichungstag der Patentschrift :
**12.05.93 Patentblatt 93/19**

(51) Int. Cl.$^5$ : **D01F 6/74**

(21) Anmeldenummer : **89902369.1**

(22) Anmeldetag : **20.02.89**

(86) Internationale Anmeldenummer :
**PCT/AT89/00016**

(87) Internationale Veröffentlichungsnummer :
**WO 89/08161 08.09.89 Gazette 89/21**

(54) **SCHWER ENTFLAMMBARE HOCHTEMPERATURBESTÄNDIGE POLYIMIDFASERN UND DARAUS HERGESTELLTE FORMKÖRPER.**

(30) Priorität : **26.02.88 AT 495/88**

(43) Veröffentlichungstag der Anmeldung :
**11.04.90 Patentblatt 90/15**

(45) Bekanntmachung des Hinweises auf die Patenterteilung :
**12.05.93 Patentblatt 93/19**

(84) Benannte Vertragsstaaten :
**AT BE CH DE FR GB IT LI LU NL SE**

(56) Entgegenhaltungen :
**EP-A- 0 119 185**
**DE-A- 1 785 165**
**US-A- 3 985 934**
**US-A- 4 188 690**
**US-A- 4 237 180**

(73) Patentinhaber : **LENZING AKTIENGESELLSCHAFT**
**Werkstrasse 1**
**A-4860 Lenzing (AT)**

(72) Erfinder : **WEINROTTER, Klaus**
**Feldgasse 14**
**A-4840 Vöcklabruck (AT)**
Erfinder : **VODIUNIG, Robert**
**Dr. Hamburger Str. 17**
**A-4840 Vöcklabruck (AT)**

(74) Vertreter : **Schwarz, Albin, Dr.**
**Albertgasse 10/8 Postfach 224**
**A-1081 Wien (AT)**

EP 0 362 312 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft schwer entflammbare hochtemperaturbeständige Polyimidfasern auf der Basis von Struktureinheiten der allgemeinen Formel

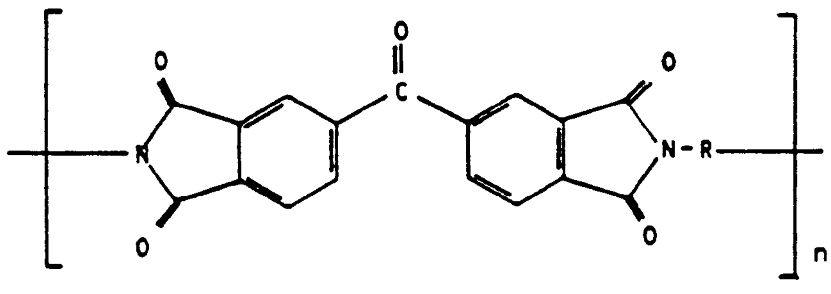

(I)

worin R die Gruppe

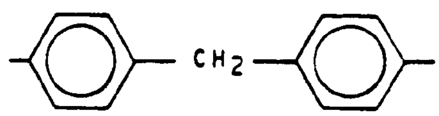

und/oder die Gruppe

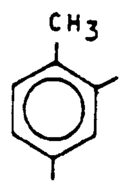

oder

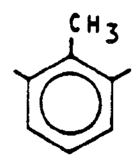

ist, ein aus diesen Fasern bestehendes Vlies sowie die nach einer Hitzebehandlung jeweils erhaltenen Fasern und Formkörper.

Copolyimidfasern mit obigen Struktureinheiten sind bekannt aus der US-A - 4,801,502 oder der US-A - 3,985,934. Es ist bekannt, daß die meisten verstreckten Synthesefasern bei Erwärmung in der Nähe der Verstrecktemperatur schrumpfen. Spezielle Polyolefin-, Polyester-, Polyvinylchlorid- und Polyamidfasern können beispielsweise etwa 50 % schrumpfen. Diese Eigenschaft wird der Faser während des Herstellungsprozesses verliehen. Meist werden Fasern zur Orientierung der Polymermoleküle nach der Verspinnung verstreckt. Diese Verstreckung bleibt zunächst erhalten, weil starke intermolekulare Kräfte die langgestreckten Moleküle daran hindern, sich wieder zusammenzuziehen und zu verknäueln (= zu relaxieren). Bei Erwärmung werden diese Kräfte aber zunehmend überwunden, so daß die Faser einen Zustand immer höherer Entropie einnehmen kann, dabei eine Schrumpfkraft entwickelt und sich zusammenzieht.

Synthesefasern mit hohem Schrumpfvermögen werden zur thermischen Verfestigung von Wirrfaservliesen eingesetzt. Diese Verwendung wird beispielsweise in der DE-A - 1 785 165, der US-A - 4,188,690 und der US-A - 4,237,180 beschrieben.

Die DE-A - 1 785 165 betrifft u.a. ein Verfahren zur Herstellung von Filzen aus einem Wirrfaservlies, das aus wenigstens zwei Faserarten besteht, wobei die eine Faserart wesentlich stärker als die andere unter Wärmeeinwirkung schrumpft. Die US-A - 4,237,180 betrifft Isoliermaterialien, die aus einer Mischung von anorganischen und organischen Fasern bestehen, von denen letztere geschrumpft sind und dadurch den Faserverband verfestigen. Die US-A - 4,188,690 beschreibt die Herstellung eines strukturlosen Vlieses, wonach organische Fasern mit einem hohen Schrumpfvermögen bei der Hitzebehandlung einen Flächenschrumpf von etwa 50 % bewirken.

Fasern mit hohem Schrumpfvermögen werden auch als Komponenten für Hochbauschgarne eingesetzt (R.W. Moncrieff, Man Made Fibers, 5. Auflage, 1970, Heywood Books, Seiten 461, 514 und 641).

Für die Herstellung besonders stabiler Formkörper aus Vliesen sollen die Fasern ein hohes Schrumpfvermögen aufweisen. Auch werden an die Formkörper noch zusätzliche Anforderungen, wie z.B. hohe Temperaturbeständigkeit und Schwerentflammbarkeit, gestellt. Derartige Fasern und Vliese kommen als Materialien

in der Flugzeug-, der Elektro- und der Kraftfahrzeugindustrie in Betracht. Bis heute konnte noch keine Faser entwickelt werden, die sowohl ein hohes Schrumpfvermögen als auch eine hohe Temperaturbeständigkeit und Schwerentflammbarkeit aufweist.

Gewisse Polyamidfasern, wie z.B. eine handelsübliche schrumpfbare Meta-Aramid-Faser (NOMEX T 463, Hersteller: Du Pont), haben zwar gute thermische Eigenschaften, aber ihr Schrumpfvermögen ist nicht ausreichend, was ihren Anwendungsbereich einschränkt.

Von Polyimidfasern mit den eingangs angegebenen Struktureinheiten ist bekannt, daß sie ausgezeichnete thermische Eigenschaften besitzen und bei Zersetzungstemperatur geringste Rauchdichte und Toxizität der Zersetzungsgase aufweisen.

Die Erfindung setzt sich zum Ziel, Polyimidfasern zur Verfügung zu stellen, die nach Hitzebehandlung die Herstellung von Formkörpern hoher Festigkeit, hoher Temperaturbeständigkeit und Schwerentflammbarkeit bei verhältnismäßig niedriger Dichte erlauben. Weiters sollen diese Formkörper spanabhebend bearbeitbar und plastisch verformbar bleiben.

Die erfindungsgemäßen Polyimidfasern, aufgebaut auf Basis von Struktureinheiten der allgemeinen Formel

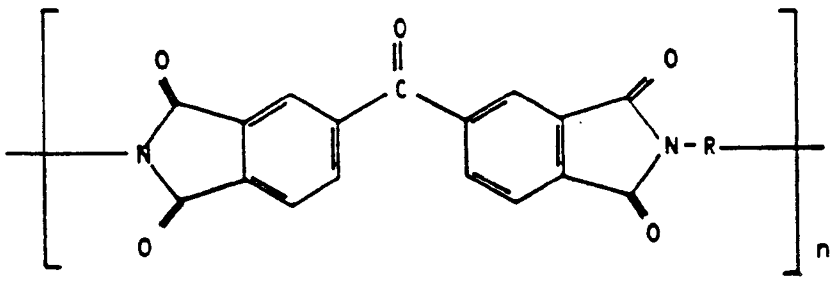

, (I)

worin R die Gruppe

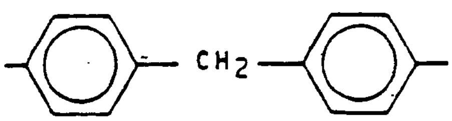

und/oder die Gruppe

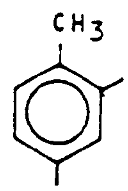

oder

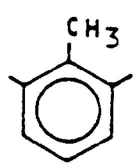

ist, sind dadurch gekennzeichnet,

- daß sie unter Hitzeeinwirkung eine Schrumpfkraft von 0,3 bis 1,1 cN entwickeln;
- daß sie unter Hitzeeinwirkung einen Faserschrumpf von 20 bis 60 % aufweisen und
- daß sie niedermolekulare Bestandteile aus der Gruppe umfassend Lösungsmittel und Oligomere in einer Menge von 0,5 bis 3 Massen- % enthalten,

wobei unter Hitzeeinwirkung kohäsive Bindungen zwischen einzelnen Fasern bewirkt werden.

Die Verstreckung der Polyimidfasern kann 1 : 4 bis 1 : 10 betragen, vorzugsweise 1 : 4 bis 1 : 7. Ein wesentliches Merkmal der erfindungsgemäßen Fasern ist ihr Gehalt an niedermolekularen Bestandteilen aus der Gruppe umfassend Lösungsmittel und Oligomere. Unter Lösungsmittel sind inbesondere stark polare organische Lösungsmittel, wie z.B. Dimethylformamid, Dimethylacetamid, N-Methylpyrrolidon oder ähnliche zu verstehen. Diese niedermolekularen Bestandteile sind eine Voraussetzung für die Herstellung besonders stabiler Formkörper.

Es ist anzunehmen, daß die Wirkung dieser niedermolekularen Bestandteile darauf beruht, daß es während der Hitzeeinwirkung zu einer teilweisen Emission kommt, wobei im Zusammenwirken mit der sich dabei entwickelnden hohen Schrumpfkraft und des hohen Faserschrumpfes kohäsive Bindungen zwischen den einzelnen Fasern ausgebildet werden, obwohl diese Polyimidfasern keinen Schmelzpunkt aufweisen. Diese kohäsiven Bindungen verleihen den späteren Formkörpern ihre überaus hohe Stabilität und Festigkeit.

Die hitzebehandelten Fasern sind durch folgende Merkmale gekennzeichnet:

a) daß sie nach dem Erhitzen auf eine über dem Glasumwandlungsbereich liegende Temperatur zwischen 280 und 350°C, vorzugsweise zwischen 300 und 330°C, zu 20 bis 60 % ihrer Länge geschrumpft sind,

b) daß zwischen einzelnen Fasern kohäsive Bindungen vorhanden sind,

c) daß ihr Titer bezogen auf eine nicht hitzebehandelte Faser bis zu 300 % des Wertes der Ausgangsfasern erhöht ist,

d) daß ihre Festigkeit bezogen auf eine nicht hitzebehandelte Faser bis auf 30 % gesunken ist, und

e) daß die Faserdehnung bezogen auf eine nicht hitzebehandelte Faser bis auf 300 % erhöht ist.

Formkörper können vorteilhaft aus einem handhabbaren Polyimidfaser-Vlies unter Hitzeeinwirkung hergestellt werden, wobei die Fasern durch einen Nadelungsprozeß verbunden sind und das Vlies ein Flächengewicht von 60 g/m$^2$ bis zu 3000 g/m$^2$ aufweist.

Die Formkörper können aber auch aus jedem anderen Polyimid-Faserverbund hergestellt werden, wie z.B. Gewebe oder Gewirke in einlagiger oder auch mehrlagiger Form, wobei die Formkörper unter Hitzeeinwirkung und gegebenenfalls unter Druckeinwirkung bei einer Temperatur im Glasumwandlungsbereich zwischen 280 und 350°C, vorzugsweise 300 bis 330°C, geformt sind.

Die erfindungsgemäßen Formkörper weisen vorteilhaft eine Reißfestigkeit zwischen 5 und 50 N/mm$^2$, eine Reißdehnung zwischen 5 und 80 %, E-Moduli zwischen 100 und 500 N/mm$^2$ und eine Biegefestigkeit bis 30 N/mm$^2$ auf.

Sie besitzen weiters die überaus wertvollen Eigenschaften, daß sie bei Erwärmung auf Temperaturen über dem Glasumwandlungsbereich der Fasern plastisch verformbar sind und daß die Dichte maximal 1,20 g/cm$^3$ beträgt.

Nachdem die Dichte des Polymeren 1,41 g/cm$^3$ beträgt, enthält der Formkörper noch entsprechendes "freies Volumen" im Faserverbund, also kleine Freiräume, die aufgrund ihrer Kleinheit wie Kapillaren wirken und so z.B. Wasser aufsaugen können. Insgesamt kann der Formkörper bei Raumtemperatur eine Wassermenge von 10 bis 50 % seiner Masse aufnehmen. Die Kapillarkräfte wirken aber auch auf jede andere niedrigviskose Flüssigkeit bis etwa 50 Pas.

Die Dichte von 1,20 g/cm$^3$ läßt sich bei den erfindungsgemäßen Formkörpern ohne Druckbeaufschlagung erreichen.

Für den technischen Einsatz der Formkörper ist auch ihre Bearbeitbarkeit von entscheidender Bedeutung. Auch diesbezüglich zeichnen sich die erfindungsgemäßen Formkörper dadurch aus, daß sie problemlos spanabhebend, z.B. durch Sägen, Bohren, Fräsen oder Schleifen, bearbeitbar sind. Aufgrund der mehr oder weniger faserigen Oberfläche ist auch ihre Klebbarkeit hervorragend.

Die Erfindung umfaßt weiters ein Verfahren zur Herstellung der Formkörper. Es besteht darin, daß ein Faserverbund unter Verwendung von Formgebungsmitteln, wie einer Matrize, auf eine Temperatur im Glasumwandlungsbereich zwischen 280 bis 350°C, vorzugsweise 300 bis 330°C, erhitzt und in die gewünschte Form gebracht wird, wobei während des Formgebungsprozesses unter Entwicklung einer Schrumpfkraft von 0,3 cN bis 1,1 cN die Ausgangsdichte des Faserverbundes bis auf das Zehnfache erhöht wird.

Als günstig hat sich dabei herausgestellt, wenn die Hitzeeinwirkung auf den Faserverbund bei der Formgebung zwischen 1 und 30 min beträgt.

Mit diesem Verfahren ist es möglich, formgetreue Abbildungen von dreidimensionalen Gebilden jeglicher Gestalt durch exaktes Aufschrumpfen zu erhalten. Fig. 1 zeigt ein Beispiel eines dreidimensional gestalteten derartigen Formkörpers, der durch Aufschrumpfen eines erfindungsgemäßen Polyimid-Faservlieses auf eine schalenartige Matrize erhalten wurde.

Das Vlies wies eine Dicke von 2,5 mm auf und bestand aus Polyimidfasern, hergestellt aus Benzophenon-3,3',4,4'-tetracarbonsäuredianhydrid und 4,4'-Methylen-bis-(phenylisocyanat) und 2,4- und 2,6-Tolylendiisocyanat, mit einem Verstreckungsverhältnis von 1 : 4. Der Gehalt an niedermolekularen Bestandteilen, wie Dimethylformamid und Oligomeren, war 1,5 Massen%. Nach einer Hitzebehandlung von 10 min bei 320°C wurde der in Fig. 1 dargestellte Gegenstand mit einer Dicke von 1 mm, einer Reißfestigkeit von 19 N/mm$^2$, einer Reißdehnung von 32 % und einer Dichte von 0,4 g/cm$^3$ erhalten.

Die Erfindung wird nachfolgend noch näher erläutert.

A) Einfluß der Hitzebehandlung auf die Fasereigenschaften

Tabelle 1 zeigt, wie sich der Titer, das Schrumpfvermögen und die Schrumpfkraft einer Polyimidfaser, die

im Verhältnis 1 : 4 verstreckt ist, mit der Temperatur ändern.

Tabelle 1

| Temperatur (°C) | unbehandelt x) | 280 x) | 300 | 320 | 330 | 350 | 370 x) | 400 x) |
|---|---|---|---|---|---|---|---|---|
| Titer (dtex) | 2,3 | 2,6 | 2,4 | 3,4 | 4,6 | 5,3 | 6,0 | 6,2 |
| Schrumpf (%) | - | 0,3 | 2,2 | 7,2 | 20 | 28 | 40 | 44 |
| Schrumpfkraft (cN) | - | - | 0,20 | 0,29 | 0,31 | 0,25 | 0,12 | - |

**x) Vergleichsbeispiel**

Als Schrumpfkraft wird das Produkt der Schrumpfspannung mit dem entsprechenden Fasertiter bezeichnet. Zur Bestimmung der Schrumpfspannung wurde die Längenänderung ΔL (in %) einzelner Fasern unter verschiedenen Belastungen nach Erwärmung auf bestimmte Temperaturen gemessen. Das Ergebnis ist in Fig. 2 dargestellt. Die Schrumpfspannung ergibt sich dabei als jene Belastung der Faser (in cN/tex), bei der keine Längenänderung nach Erwärmung festzustellen ist. Sie wird durch Interpolation bestimmt und ist in Fig. 2 für drei Temperaturen dargestellt.

Aus Tabelle 1 ist weiters ersichtlich, daß die Fasern ihre größte Schrumpfkraft in einem engen Temperaturbereich um 330°C entwickeln. Diese Temperatur entspricht fast genau dem Glasumwandlungspunkt der Faser (315°C). Dieses Verhalten ist ungewöhnlich, da verstreckte Synthesefasern üblicherweise in einem breiten Temperaturbereich verstärkt relaxieren, der ab dem Glasumwandlungspunkt beginnt und Schrumpfkräfte entwickeln, die mit zunehmender Temperatur kontinuierlich oder diskontinuierlich ansteigen. Dieses Ansteigen ist üblicherweise bis nahe an den Schmelzbereich zu beobachten.

Gemäß Tabelle 1 weist die getestete Faser (Verstreckungsverhältnis 1 : 4) am Punkt ihrer höchsten Schrumpfkraft einen Schrumpf von 20 % auf. Das ist ausreichend, um z.B. einen erfindungsgemäßen Polyimidfaserverbund ohne Druckbeaufschlagung durch alleiniges Erwärmen auf Temperaturen von vorzugsweise 300 bis 330°C zu verfestigen. Das ist nur deshalb möglich, weil die Schrumpfkraft, das Schrumpfvermögen und die Emission der niedermolekularen Bestandteile in sehr günstiger Weise nahezu zeitgleich zusammenwirken.

Fig. 3 zeigt die Abhängigkeit des Faserschrumpfes S (in % der Ausgangslänge) von der Temperatur (Kurve a). Kurve b zeigt im Vergleich dazu das Schrumpfverhalten einer handelsüblichen Meta-Aramid-Faser, die vom Hersteller als "Hochschrumpffaser" bezeichnet wird. Es wird deutlich, daß das Schrumpfvermögen der erfindungsgemäßen Polyimidfaser jenes der Meta-Aramid-Faser um ein Mehrfaches übersteigt. Das Bild verschiebt sich noch mehr zugunsten der Polyimidfaser, wenn sie mehr als 1 : 4 verstreckt ist.

B) Einfluß der Verstreckung auf die Fasereigenschaften

Die Verstreckung einer Synthesefaser nach der Verspinnung bewirkt ein Ausrichten der langen Polymermoleküle parallel zur Faserachse. Dabei entsteht ein Zustand hoher molekularer Ordnung in der Faser, der nach der Verstreckung aufgrund hoher intermolekularer Kräfte eingefroren ist. Die molekulare Ordnung ist umso höher, je größer das Verstreckungsverhältnis ist. Bei der Hitzebehandlung der Faser geht diese Ordnung teilweise verloren, wobei sich eine Schrumpfkraft entwickelt, die umso größer ist, je mehr Ordnung im Faserfaden verloren geht. Dieses Verhalten zeigt auch die erfindungsgemäße Polyimidfaser, wie Tabelle 2 zu entnehmen ist.

Tabelle 2

| Verstreckung | | 1 : 2 xx) | 1 : 4 xx) | 1 : 5 | 1 : 6 | 1 : 7 |
|---|---|---|---|---|---|---|
| Titer (dtex) | vor*) | 2,54 | 2,28 | 2,23 | 2,27 | 2,25 |
| | nach*) | 3,41 | 4,18 | 4,07 | 5,72 | 6,01 |
| Schrumpf (%) | | 4 | 19 | 22 | 26 | 40 |
| Schrumpfkraft (cN) | | 0,10 | 0,31 | 0,36 | 0,80 | 0,90 |

*) Erwärmung auf 330°C xx) Vergleichsbeispiel

C) Mechanische Eigenschaften von geschrumpften Polyimidfaserverbunden

Ein nach bekannter Tecknik genadeltes erfindungsgemäßes Polyimidfaservlies mit einem Ausgangsflächengewicht von 1000 g/m$^2$ und einer Dicke von 9 mm wurde bei einer mittleren Schrumpftemperatur von 330°C drei Minuten einem Luftstrom ausgesetzt. Während des Schrumpfungsprozesses erhöhte sich das Flächengewicht auf 4800 g/m$^2$ und die Dichte auf 0,75 g/cm$^3$. Die entstandene Platte wies eine Reißfestigkeit von 15 N/mm$^2$ und eine Reißdehnung von 5 % auf. Diese Werte wurden in Anlehnung an die DIN 53 455 ermittelt. Es wurde weiters festgestellt, daß bei Verdoppelung der Schrumpfzeit die Dichte nahezu konstant bleibt, während die Reißfestigkeit auf 20 N/mm$^2$ und die Reißdehnung auf 7 % ansteigt.

Tabelle 3 zeigt die mechanischen Eigenschaften einer Reihe von Platten, die aus Vliesen verschiedenster Ausgangsdichten erhalten wurden.

Tabelle 3

| | | | | | |
|---|---|---|---|---|---|
| Dichte vor HB (g/cm$^3$) | 0,11 | 0,05 | 0,06 | 0,10 | 0,20 |
| Dichte nach HB (g/cm$^3$) | 0,22 | 0,30 | 0,60 | 0,70 | 1,00 |
| Reißfestigkeit (N/mm$^2$) | 5 | 5 | 16 | 20 | 24 |
| Reißdehnung (%) | 6 | 55 | 15 | 7 | 20 |
| Biegefestigkeit (N/mm$^2$) | * | * | * | * | 28 |

*: Probekörper bricht nicht

HB: Hitzebehandlung

Im folgenden werden die Eigenschaften von Formkörpern aus geschrumpften, genadelten Polyimidfaservliesen in zwei weiteren Ausführungsbeispielen beschrieben.

Zunächst wurde ein in einem Spannrahmen fixiertes Vlies der Hitzebehandlung unterworfen. Dazu wurde ein derartig fixiertes Vlies (aus Fasern mit einem Titer von 2,2 dtex, Schnittlänge: 60 mm, Verstreckungsverhältnis 1 : 6, Lösungsmittelgehalt: 2,5 %) mit einem Flächengewicht von 150 g/m$^2$ 10 min einer Temperatur von

340°C ausgesetzt. Das thermisch verfestigte Vlies wies eine Reißfestigkeit von 5 N/mm², und eine Reißdehnung von 80 % auf.

Eine Dichte von 1,2 g/cm³ ließ sich erreichen, als ein genadeltes Vlies aus Stapelfasern (Schnittlänge: 60 mm, Titer: 2,2 dtex) mit einer Dicke von 12 mm und einem Ausgangsflächengewicht von 2000 g/m² 20 min einer Temperatur von 340°C ausgesetzt wurde. Das entstandene thermisch verfestigte Vlies wies außerdem eine Reißfestigkeit von 50 N/mm², eine Reißdehnung von 5 % und eine Biegefestigkeit von 30 N/mm² auf.

Durch Variation der Schrumpfdauer, Schrumpftemperatur, Dichte des Faserverbundes und entsprechender Längen- und Breitenvorgabe bei Verwendung eines speziellen Spannrahmens lassen sich die mechanischen Eigenschaften von Platten wie auch von anderen Formkörpern steuern. Es hat sich als vorteilhaft erwiesen, die Hitzebehandlung in Form eines Durchsaugens von heißer Luft oder heißem Inertgas durch den Faserverbund durchzuführen. Auf diese Weise ist es möglich, Formkörper mit Reißfestigkeiten von 5 bis 50 N/mm², Reißdehnungen von 5 bis 60 % und mit E-Moduli von 100 bis 500 N/mm² sowie mit Biegefestigkeiten bis zu 30 N/mm² herzustellen.

Die Formgebung des Polyimidfaserverbundes kann während oder nach dem Schrumpfvorgang durch leichte Druckbeaufschlagung von 1 bis 10 N/mm² unterstützt werden, wodurch die faserige Oberflächenstruktur geglättet wird und die Möglichkeit besteht, reliefartige Muster einzuprägen. Nach dem abgeschlossenen Schrumpfvorgang waren alle Faserverbunde nach Wiedererwärmung über den Glasumwandlungspunkt der Polyimidfaser jederzeit wieder plastisch verformbar, wobei die vorgegebene Form nach dem Abkühlen dimensionsstabil erhalten blieb.

Alle erfindungsgemäß hergestellten Formkörper erwiesen sich als mit herkömmlichen Maschinen spanabhebend bearbeitbar, wie sie für die Holz- und Kunststoffindustrie bekannt sind.

Die ausgezeichneten mechanischen Eigenschaften der erfindungsgemäßen hitzebehandelten Fasern bzw. Formkörper werden auf die physikalische Verhakung der Fasern während des Schrumpfprozesses und auf die Ausbildung kohäsiver Bindungen zwischen den einzelnen Fasern zurückgeführt.

Diese Bindungen lasser sich elektronenoptisch erkennen. Fig. 4 zeigt das Bild einer elektronenoptischen Aufnahme eines hitzebehandelten Polyimid-Faserverbundes unter 2000- facher Vergrößerung. Zu sehen sind einzelne Fasern sowie der Querschnitt zweier durch zwei kohäsive Bindungen verschweißter Fasern. Die beiden Bindungsstellen sind durch Pfeile gekennzeichnet.

## Patentansprüche

1. Schwer entflammbare hochtemperaturbeständige Polyimidfasern auf der Basis von Struktureinheiten der allgemeinen Formel

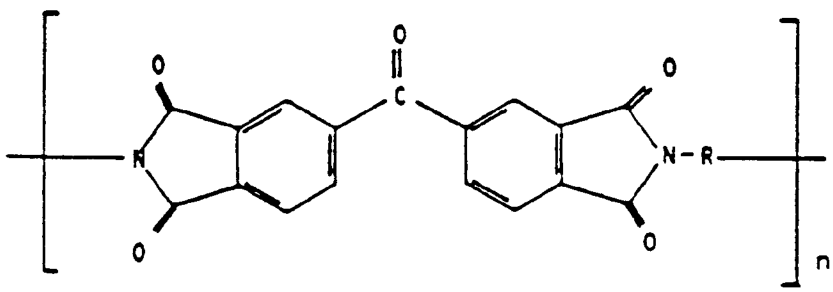

, (I)

worin R die Gruppe

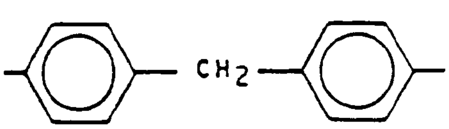

und/oder die Gruppe

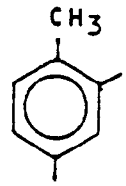

oder

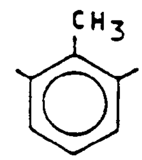

ist, dadurch gekennzeichnet,

- daß sie unter Hitzeeinwirkung eine Schrumpfkraft von 0,3 bis 1,1 cN entwickeln;
- daß sie unter Hitzeeinwirkung einen Faserschrumpf von 20 bis 60 % aufweisen und
- daß sie niedermolekulare Bestandteile aus der Gruppe umfassend Lösungsmittel und Oligomere in einer Menge von 0,5 bis 3 Massen- % enthalten,

wobei unter Hitzeeinwirkung kohäsive Bindungen zwischen einzelnen Fasern bewirkt werden.

2. Hitzebehandelte schwer entflammbare hochtemperaturbeständige Polyimidfasern nach Anspruch 1, dadurch gekennzeichnet,

   a) daß sie nach dem Erhitzen auf eine über dem Glasumwandlungsbereich liegende Temperatur zwischen 280 und 350°C, vorzugsweise zwischen 300 und 330°C, zu 20 bis 60 % ihrer Länge geschrumpft sind,

   b) daß zwischen einzelnen Fasern kohäsive Bindungen vorhanden sind,

   c) daß ihr Titer bezogen auf eine nicht hitzebehandelte Faser bis zu 300 % des Wertes der Ausgangsfasern erhöht ist,

   d) daß ihre Festigkeit bezogen auf eine nicht hitzebehandelte Faser bis auf 30 % gesunken ist, und

   e) daß die Faserdehnung bezogen auf eine nicht hitzebehandelte Faser bis auf 300 % erhöht ist.

3. Handhabbares, unter Hitzeeinwirkung zu Formkörpern verformbares Vlies aus schwer entflammbaren hochtemperaturbeständigen Polyimidfasern nach Anspruch 1, dadurch gekennzeichnet, daß die Fasern durch einen Nadelungsprozeß verbunden sind und das Vlies eir Flächengewicht von 60 g/m$^2$ bis zu 3000 g/m$^2$ aufweist.

4. Formkörper aus geschrumpften schwer entflammbaren hochtemperaturbeständigen Polyimidfasern gemäß Anspruch 2, dadurch gekennzeichnet, daß die Formkörper aus einem Faserverbund unter Hitze- und gegebenenfalls Druckeinwirkung bei einer Temperatur im Glasumwandlungsbereich zwischen 280 und 350°C, vorzugsweise 300 bis 330°C, geformt sind.

5. Formkörper nach Anspruch 4, dadurch gekennzeichnet, daß die Reißfestigkeit zwischen 5 und 50 N/mm$^2$, die Reißdehnung zwischen 5 und 80 %, die E-Moduli zwischen 100 und 500 N/mm$^2$ und die Biegefestigkeit bis 30 N/mm$^2$ betragen.

6. Verfahren zur Herstellung von schwer entflammbaren hochtemperaturbeständigen Formkörpern auf Basis von Polyimidfasern mit Struktureinheiten der allgemeinen Formel

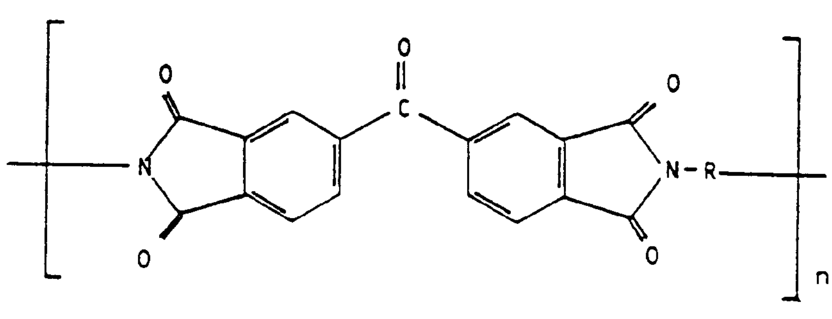

, (I)

worin R die Gruppe

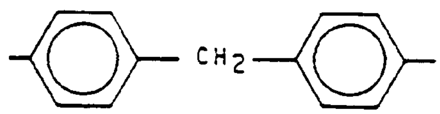

und/oder die Gruppe

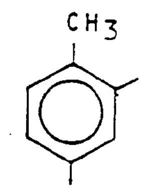

oder

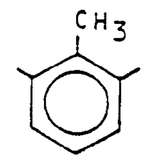

ist, dadurch gekennzeichnet, daß ein Verbund von Fasern gemäß Anspruch 1 unter Verwendung von Formgebungsmitteln, wie einer Matrize, auf eine Temperatur im Glasumwandlungsbereich zwischen 280 bis 350°C, vorzugsweise 300 bis 330°C, erhitzt und in die gewünschte Form gebracht wird, wobei während des Formgebungsprozesses unter Entwicklung einer Schrumpfkraft von 0,3 cN bis 1,1 cN die Ausgangsdichte des Faserverbundes bis auf das Zehnfache erhöht wird.

7. Verfahren nach Anspruch 6, dadurch gekennzeichnet, daß die Hitzeeinwirkung auf den Faserverbund bei der Formgebung zwischen 1 und 30 min beträgt.

## Claims

1. Difficultly flammable, high-temperature resistant, polyimide fibres based on structural units of the general formula

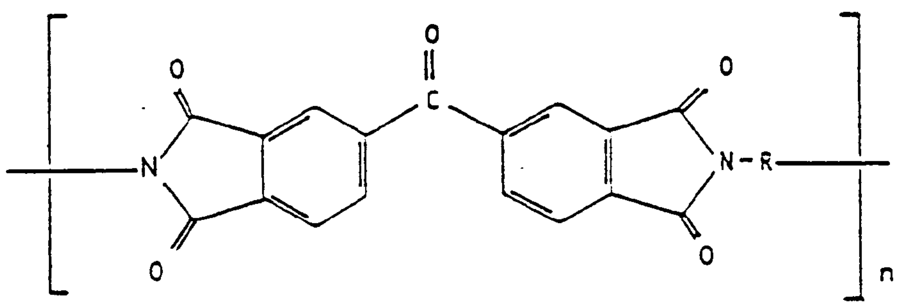

(I)

wherein R is the group

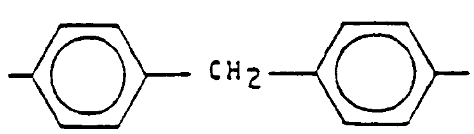

and/or the group

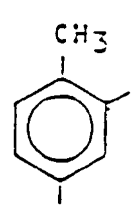

or

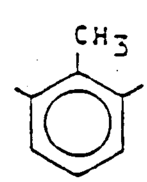

characterised in that,

- they develop a shrink force of 0.3 to 1.1 cN by the action of heat,
- they have a fibre shrinkage of 20 to 60% by the action of heat, and
- they contain low molecular weight components from the group comprising solvents and oligomers in an amount from 0.5 to 3 weight%,

wherein cohesive bonds are formed between individual fibres by the action of heat.

**2.** Heat-treated, difficultly flammable, high-temperature resistant, polyimide fibres in accordance with Claim 1, characterised in that,

a) after heating to a temperature above the glass transition region between 280 and 350 °C, preferably between 300 and 330 °C, they are shrunken to between 20 and 60% of their length,

b) cohesive bonds are present between individual fibres,

c) their titre is increased by up to 300% of the value of the initial fibre based on a non-heat-treated fibre,

d) their strength falls by up to 30% based on a non-heat-treated fibre,

e) and the fibre elongation is increased by up to 300% based on a non-heat-treated fibre.

**3.** Manageable, non-woven material of difficultly flammable, high-temperature resistant, polyimide fibres which can be shaped under the action of heat to give moulded bodies in accordance with Claim 1, characterised in that, the fibres are bonded with a needling process and that the non-woven material has a basis weight from 60 g/m$^2$ to 3000 g/m$^2$.

**4.** Moulded bodies of shrunken, difficultly flammable, high-temperature resistant, polyimide fibres in accordance with Claim 2, characterised in that, the moulded bodies are formed from a fibre composite by the action of heat and optionally by the action of pressure at a temperature in the glass transition region between 280 and 350 °C, and preferably between 300 and 330 °C.

**5.** Moulded bodies in accordance with Claim 4, characterised in that, the tear resistance is between 5 and 50 N/mm$^2$, the elongation at break is between 5 and 80%, the modulus of elasticity is between 100 and 500 N/mm$^2$ and flexural strength is up to 30 N/mm$^2$.

**6.** Process for the preparation of difficultly flammable, high-temperature resistant, moulded bodies based on polyimide fibres with structural units of the general formula

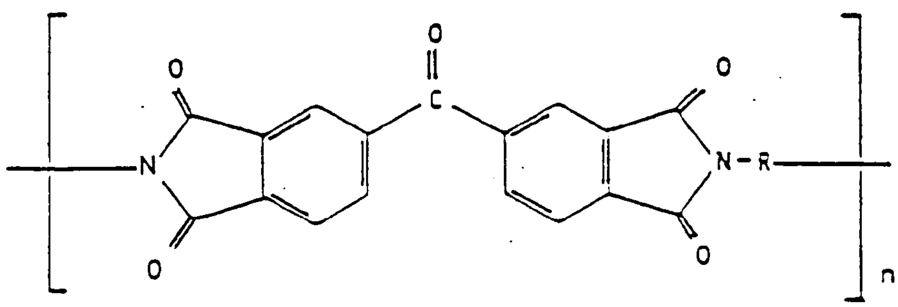

(I)

wherein R is the group

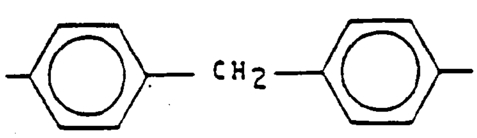

and/or the group

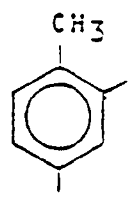

or

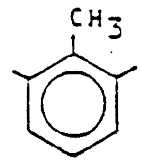

characterised in that, a composite of fibres according to Claim 1 is heated using a shaping device such as a mould at a temperature in the glass transition region between 280 and 350 °C, preferably between 300 and 330 °C, and is brought to the desired shape, wherein the initial density of the fibre composite is increased by up to ten-fold during the shaping process by the development of a shrink force from 0.3 cN to 1.1 cN.

7. Process in accordance with Claim 6, characterised in that, the heat treatment of the fibre composite in the shaping process is between 1 and 30 minutes.

## Revendications

1. Fibres en polyimide difficilement inflammables et résistant à des températures élevées, à base d'unités de structure répondant à la formule générale :

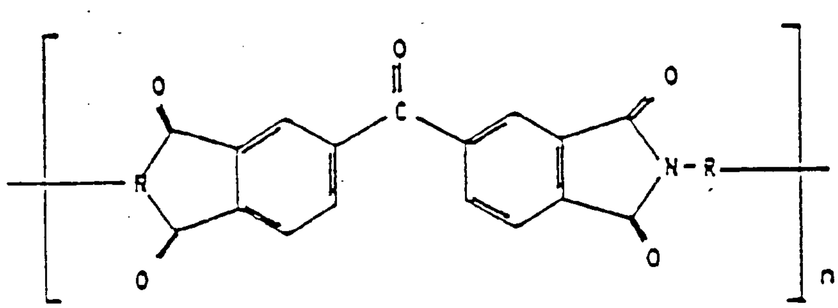

, (I)

dans laquelle R représente le groupe

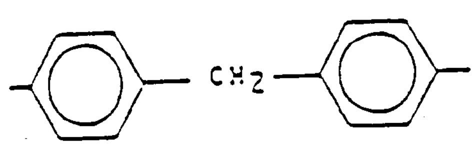

et/ou le groupe

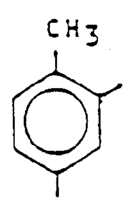

ou

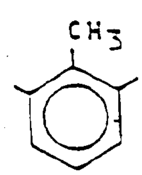

caractérisées en ce que

- sous l'influence de la chaleur, elles développent une force de retrait de 0,3 à 1,1 cN;
- sous l'action de la chaleur, elles présentent un retrait des fibres de l'ordre de 20 à 60%; et
- elles contiennent des constituants à bas poids moléculaire choisis parmi le groupe englobant des solvants et des oligomères, en une quantité de 0,5 à 3% en masse,

des liaisons cohésives étant générées entre les fibres individuelles sous l'action de la chaleur.

2. Fibres en polyimide difficilement inflammables et résistant à des températures élevées, selon la revendication 1, ayant subi un traitement thermique, caractérisées en ce que
   a) après réchauffement à une température se situant au-delà du domaine de transition vitreuse entre 280 et 350°C, de préférence entre 300 et 330°C, elles ont subi un retrait jusqu'à concurrence de 20 à 60% de leur longueur,
   b) des liaisons cohésives sont présentes entre les fibres individuelles,
   c) leur titre, rapporté à une fibre qui n'a pas subi de traitement thermique, s'est élevé jusqu'à 300% de la valeur des fibres de départ,
   d) leur densité a chuté jusqu'à concurrence de 30%, rapportée à une fibre qui n'a pas subi de traitement thermique, et
   e) l'allongement des fibres s'est élevé jusqu'à 300%, rapporté à celle d'une fibre qui n'a pas subi de traitement thermique.

3. Non-tissé manipulable, déformable sous l'action de la chaleur pour donner lieu à des corps moulés, constitué par des fibres en polyimide difficilement inflammables et résistant à des températures élevées, selon la revendication 1, caractérisé en ce que les fibres sont reliées à l'intervention d'un processus d'aiguilletage et le non-tissé présente un poids superficiel allant de 60 g/m$^2$ jusqu'à 3000 g/m$^2$.

4. Corps moulés constitués par des fibres en polyimide difficilement inflammables, résistant à des températures élevées et ayant subi un retrait, selon la revendication 2, caractérisés en ce que les corps moulés sont façonnés à partir d'un composite en fibres sous l'effet de la chaleur et éventuellement de la pression à une température dans le domaine de transition vitreuse entre 280 et 350°C, de préférence de 300 à 330°C.

5. Corps moulés selon la revendication 4, caractérisés en ce que la résistance à la rupture se situe entre 5 et 50 N/mm$^2$, l'allongement à la rupture se situe entre 5 et 80%, les coefficients d'élasticité se situent entre 100 et 500 N/mm$^2$ et la résistance à la flexion va jusqu'à 30 N/mm$^2$.

6. Procédé pour la préparation de corps moulés difficilement inflammables et résistant à des températures élevées, à base de fibres en polyimide comprenant les unités de structure répondant à la formule générale

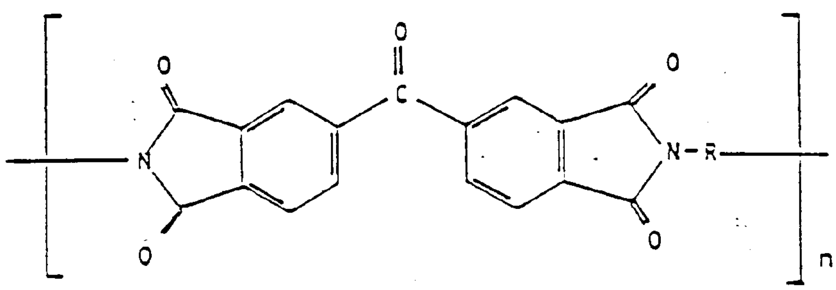

, (I)

dans laquelle R représente le groupe

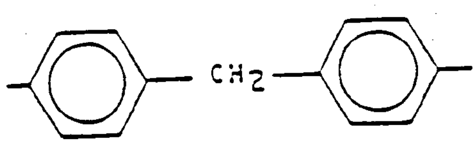

et/ou le groupe

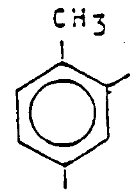

ou

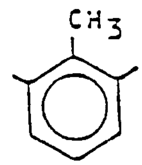

caractérisé en ce qu'on chauffe un composite de fibres selon la revendication 1 en utilisant des agents de façonnement, tels qu'une matrice, à une température dans le domaine de transition vitreuse entre 280 et 350°C, de préférence de 300 à 330°C, et on l'amène à la forme désirée, la densité de départ du composite renforcé par des fibres étant multipliée par dix au cours du processus de façonnement avec développement d'une force de retrait de 0,3 cN à 1,1 cN.

7. Procédé selon la revendication 6, caractérisé en ce que l'effet de la chaleur sur le composite en fibres, lors du façonnement, dure entre 1 et 30 minutes.

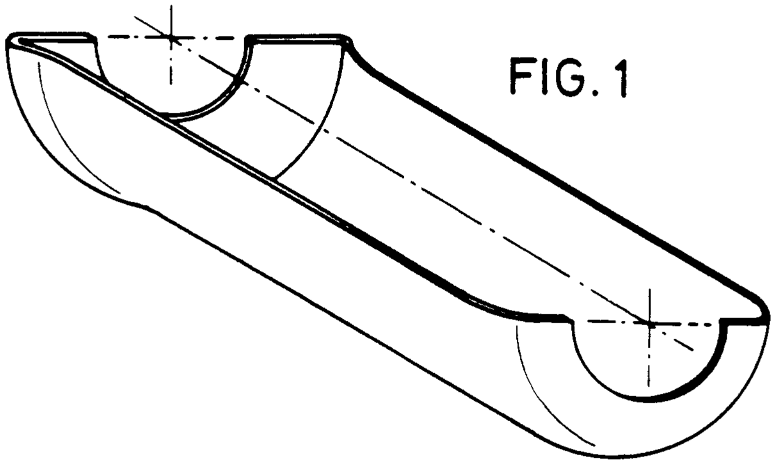

FIG. 1

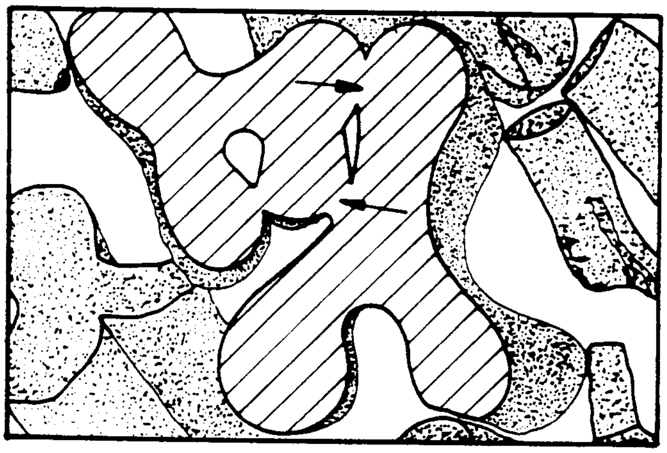

FIG. 4

FIG. 3

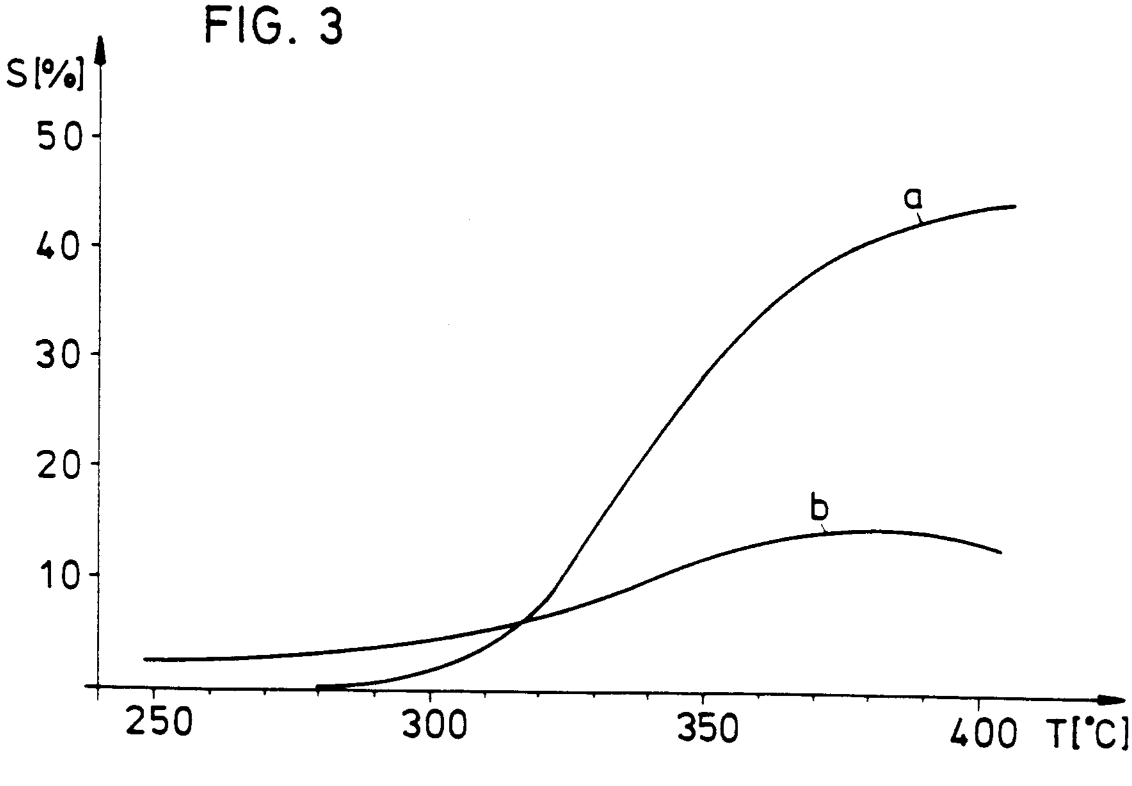

FIG. 2

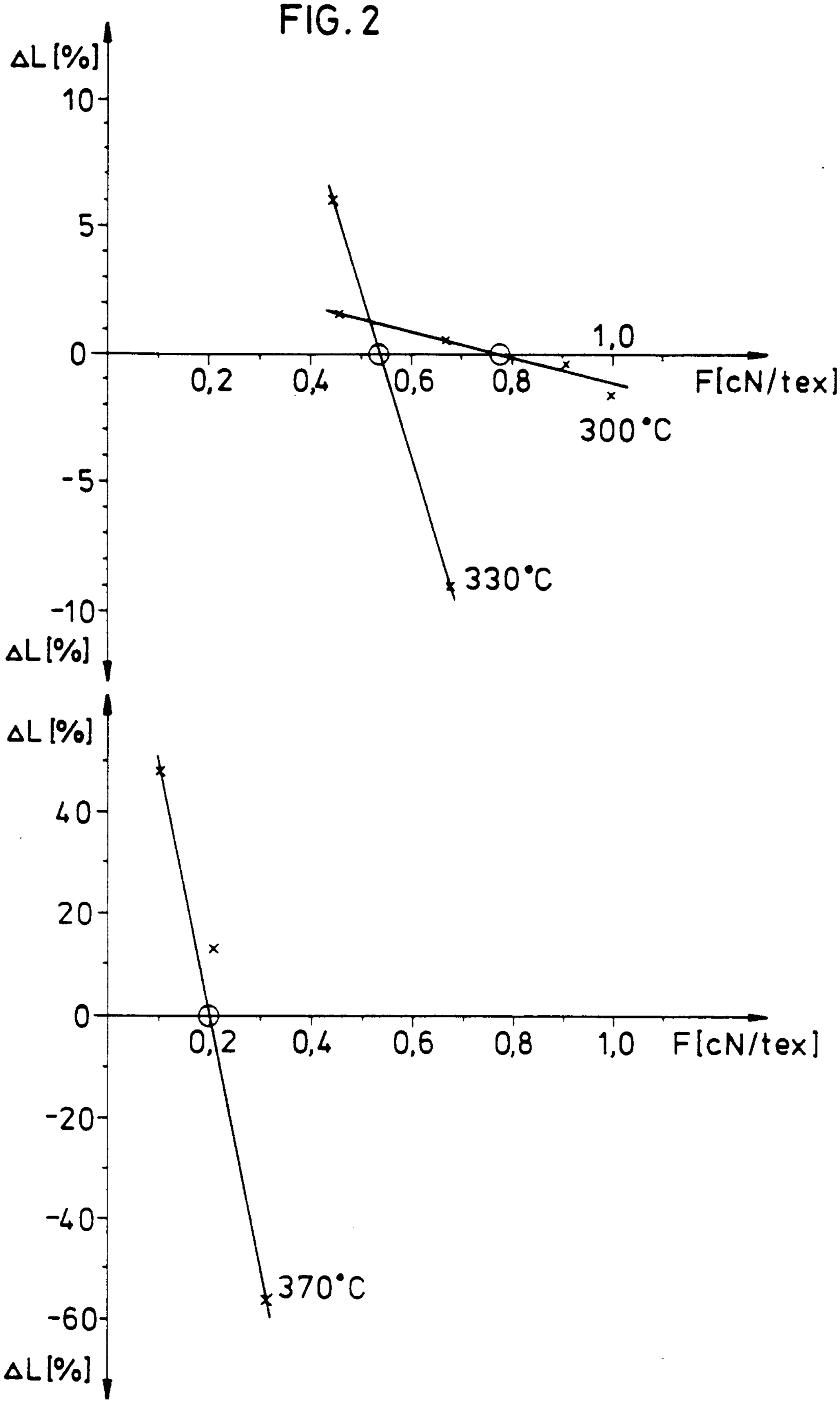
ΔL [%]
10
5
0
-5
-10
ΔL [%]
0,2
0,4
0,6
0,8
1,0
F [cN/tex]
300 °C
330 °C
ΔL [%]
40
20
0
-20
-40
-60
ΔL [%]
0,2
0,4
0,6
0,8
1,0
F [cN/tex]
370 °C